Europäisches Patentamt

European Patent Office

Office européen des brevets

(19)

(11) Veröffentlichungsnummer: **0 108 277**
**B1**

(12) **EUROPÄISCHE PATENTSCHRIFT**

(45) Veröffentlichungstag der Patentschrift:
**04.06.86**

(21) Anmeldenummer: **83110147.2**

(22) Anmeldetag: **12.10.83**

(51) Int. Cl.⁴: **A 01 D 87/12,** A 01 D 90/08

(54) **Fahrbares Stapelgerät für rechteckige Halmgutballen.**

(30) Priorität: **05.11.82 DE 3240876**

(43) Veröffentlichungstag der Anmeldung:
**16.05.84 Patentblatt 84/20**

(45) Bekanntmachung des Hinweises auf die Patenterteilung:
**04.06.86 Patentblatt 86/23**

(84) Benannte Vertragsstaaten:
**DE FR GB IT NL**

(56) Entgegenhaltungen:
**DE - A - 2 940 175**
**DE - B - 1 130 365**
**GB - A - 1 208 292**
**US - A - 3 523 616**

(73) Patentinhaber: **GEBRÜDER WELGER GmbH & Co. KG,**
**Gebrüder-Welger-Strasse 3, D-3340 Wolfenbüttel (DE)**

(72) Erfinder: **Czok, Helmut, Leo-v. Klenze-Strasse 14,**
**D-3342 Schladen (DE)**

## Beschreibung

Die Erfindung betrifft ein fahrbares Stapelgerät für rechteckige Halmgutballen, bestehend aus einer horizontalen, beidseits in vertikalen Führungen gelagerten Plattform, welche nach Aufschieben eines Halmgutballens aus einer obersten Stellung in mehreren Stufen entsprechend der Ballenhöhe absenk- und in ihrer untersten Stellung in eine entgegen der Fahrtrichtung abfallende Schrägstellung neigbar ist und welches einen Ballenfühler besitzt.

Eine derartige Vorrichtung lässt sich aus der DE-A-P 29 40 175.0 entnehmen. Hier erstreckt sich ein als Plattform ausgebildeter Stapelrost von den in Fahrtrichtung vorne gelegenen Führungen einseitig austragend nach hinten. Die Absenkbewegung des Stapelrostes ist mittels eines Hydraulikzylinders und Elektroendschaltern an den Führungen gesteuert. Diese Steuerung des Stapelrostes ist aufwendig und störungsanfällig. Die Endschalter sind zu empfindlich für den rauhen Einsatz der Vorrichtung in staubiger Umgebung. Das abgabeseitige Ende des Stapelrostes ist durch eine schwenkbare Heckklappe abgeschlossen, seitlich umgeben den Stapelrost Bordwände, damit der aus vielen kleinen Ballen bestehende Stapel nicht auseinanderfällt. Zum Entladen des Ballenstapels wird die Heckklappe geöffnet. Hier ist ein Entladeschieber vorgesehen, der in abgesenkter, geringfügig entgegen der Fahrtrichtung abfallender Schrägstellung der Plattform in den Boden einsticht und bei Vorwärtsbewegung des Stapelgerätes den Ballenstapel von der Plattform abschiebt, wobei der Stapel zur Auflage auf den Erdboden kommt. Dabei wandert der Entladeschieber bis ans Ende der Plattform und muss anschliessend wieder in seine Grundstellung zurückgeholt werden. Nachteilig ist, dass für das Stapeln und für das Entladen zwei voneinander getrennte Vorrichtungen erforderlich sind. Der Entladeschieber arbeitet nicht bei allen Bodenbeschaffenheiten zuverlässig und erfordert insgesamt einen grossen konstruktiven Aufwand.

Die geringe Schrägstellung des Stapelrostes dient hier zur besseren Verankerung des Entladeschiebers im Boden. Ein Abziehen des Stapels allein durch Reibschluss zwischen Stapelunterkante und Erdboden wäre unmöglich, da der aus vielen kleinen Einzelballen bestehende Stapel auseinandergerissen würde.

Der Erfindung liegt die Aufgabe zugrunde, eine Vorrichtung der eingangs erläuterten Art so auszubilden, dass die für das Übereinanderstapeln der Ballen erforderliche Absenkbewegung der Plattform in gleichmässigen Stufen durch mechanische Elemente gesteuert wird und das Entladen eines gebildeten Ballenstapels von der Plattform ohne zusätzliche Förderelemente gewährleistet ist.

Diese Aufgabe wird gemäss der Erfindung dadurch gelöst, dass

a) die Absenkstufen der Plattform durch entriegelbare Klinken festgelegt sind;

b) die Plattform im Bereich etwa ihrer halben Länge in den Führungen gelagert ist;

c) der Ballenfühler die Absenkbewegung der Plattform erst freigibt, wenn der Halmgutballen über das abgabeseitige, freie Plattformende so weit hinausragt, dass das überstehende Ballenstück in der Schrägstellung der Plattform auf dem Erdboden aufliegt.

Das Festlegen der Absenkstufen der Plattform durch entriegelbare Klinken gewährleistet mit einfachen mechanischen Mitteln in jedem Fall eine sichere und genaue Absenkung der Plattform auf die jeweilige Stufe. Dieses Einhalten der Stellungen ist besonders wichtig für eine reibungslose Übergabe der Ballen auf die Plattform. Wäre beispielsweise die Absenkung der Plattform zu gering, so würde das Nachführen des folgenden Ballens durch den vorhergehenden behindert. Durch die Aufhängung der Plattform in ihrer halben Länge wird eine gleichmässige und niedrige Belastung der Lagerung der Plattform erzielt und Störungen beim Absenken der Plattform durch Klemmen in den Führungen werden vermieden. Darüber hinaus erlaubt die mittige Aufhängung der Plattform trotz geringem Bodenabstand der Plattform in ihrer untersten Stellung ausreichende Schrägstellwinkel der Plattform zum Entladen des Ballenstapels durch Bodenberührung. Dadurch dass der Halmgutballen in seiner Ruhelage über das abgabeseitige, freie Plattformende nach hinten hinausragt, wodurch das überstehende Ballenstück in der Schrägstellung der Plattform auf dem Erdboden aufliegt, wird der Ballenstapel selbst sicher am Erdboden durch Reibschluss festgehalten, und die Plattform kann während der Vorwärtsbewegung unter dem Ballenstapel weggezogen werden. Das Zurückstellen der Plattform aus der Schrägstellung in die horizontale Lage ist mit geringem Bauaufwand durch ein geringes Gegengewicht oder geringe Federkraft möglich, weil die Plattform durch die mittige Aufhängung eine Selbstrückstelltendenz aufweist.

Für eine automatische und betriebssichere Durchführung des Stapelvorganges bei geringem konstruktiven Aufwand schlägt die Erfindung vor, dass die Klinken den Führungen zugeordnet sind und mit dem Ballenfühler, welcher am abgabeseitigen Ende der Plattform angeordnet ist, gekoppelt sind, wobei der Ballenfühler die Absenkung der Plattform durch Entriegelung der Klinken freigibt, wenn der Ballen seine durch den Ballenfühler vorbestimmte Endlage erreicht hat und die Klinken die Plattform nach ihrer Absenkung um einen der Ballenhöhe entsprechenden Weg die Plattform selbsttätig arretieren. Durch diese Ausgestaltung wird die Absenkbewegung der Plattform durch mechanische Elemente zwangsläufig gesteuert, wodurch Betriebsstörungen vermieden werden.

Nach einem weiteren Merkmal der Erfindung ist der Plattform auf jeder Seite ein Laufrollenpaar zugeordnet, wobei die Laufrollen eines Paares übereinander in einem Abstand angeordnet sind, welcher der Ballenhöhe entspricht, so dass für die oberste Stellung der Plattform die untere Laufrolle an der Klinke anliegt und für die nächste Stufe nach Absenken der Plattform die obere Laufrolle an derselben Klinke anliegt. Durch dieses Merkmal wird für zwei Höhenstellungen der Plattform nur eine Klinke benötigt.

Die Laufrolle besteht vorzugsweise aus zwei frei drehbaren, koaxialen Rollen, wobei eine Rolle der Plattformführung dient und die andere, im Durchmesser etwas kleinere Rolle mit der Klinke zusammenwirkt. Dadurch wird beim Entriegeln der Klinke eine Abrollbewegung zwischen Klinke und Rolle erzielt, die einerseits verschleissarm ist und andererseits geringe Entriegelungskraft erfordert.

Um die Bauhöhe des Gerätes für das Stapeln der Ballen maximal auszunutzen und einen ausreichenden Bodenabstand für die Schrägstellung der Plattform zu erreichen, ist es vorteilhaft, dass die vertikalen Führungen im Bereich der untersten Stellung der Plattform einen horizontalen Führungausschnitt aufweisen und dass ein schwenkbares Kurvensegment vorgesehen ist, welches den horizontalen Führungsausschnitt absperrt oder freigibt. Hierdurch kann nach dem Aufschieben des letzten Ballens auf den Ballenstapel ohne weiteres Absenken der Plattform diese in die Schrägstellung gebracht und der gesamte Ballenstapel entladen werden.

In vorteilhafter Weise liegt der Schwerpunkt der unbeladenen Plattform in Fahrtrichtung gesehen vor der Führung und der Schwerpunkt der beladenen Plattform hinter der Führung. Einerseits bewirkt so die Schwerkraft die Schrägstellung der Plattform zum Entladen und andererseits wird die Zurückbewegung der leeren Plattform in die horizontale Lage unterstützt.

Um ein Verschieben des bereits gebildeten Teilballenstapels während des weiteren Stapelns zu vermeiden, hat es sich als besonders zweckmässig herausgestellt, wenn im Bereich der der obersten Stellung der Plattform unmittelbar folgenden ersten Absenkstufe beidseits an den Führungen Ballenrückhalter angeordnet sind, welche während der Ballenstapelbildung in den jeweils sich unterhalb des neu aufzuschiebenden Ballens befindlichen Ballen eingreifen und ihn in Schubrichtung festhalten, während sie zum Entladen des Ballenstapels ausser Balleneingriff gebracht werden.

Zur unmittelbaren Übernahme der von einer Ballenpresse zugeführten Ballen ist es zweckmässig, dass sich die Plattform in ihrer obersten Stellung an einen Presskanalboden anschliesst und sich in Presskanalbodenebene nach hinten erstreckt, wobei ihre Breite etwa der Presskanalbreite entspricht und ihre Länge kürzer als die Ballenlänge bemessen ist.

Vorteilhafte Weiterbildungen sind in den Unteransprüchen dargelegt.

Die erfindungsgemässe Vorrichtung erlaubt durch die Kombination mit einer Grossballenpresse in äusserst einfacher Weise das Übereinanderstapeln von flachen Grossballen z.B. der Abmessung 1,20 m Breite × 0,40 m Höhe × 2,40 m Länge zur Bildung eines Grossballens der Abmessung 1,20 m × 1,20 m × 2,40 m und die direkte Feldablage dieses Grossballens. Damit kommen die Vorteile dieser Grossballenpresse, wie — einfache Bauweise, relativ niedriges Gewicht und verhältnismässig geringer Leistungsbedarf — gegenüber einer vergleichbaren Grossballenpresse mit Kanalquerschnitt 1,20 m × 1,20 m zum Tragen. Gleichzeitig wird durch das Übereinanderstapeln der flachen Grossballen mit Hilfe des Stapelgerätes ein Grossballen gebildet, der einerseits die günstigen Transporteigenschaften der grossvolumigen Einheiten besitzt, andererseits aber die für die nachfolgende Verwertung wichtigen Vorteile kleinerer Einheiten aufweist.

Die Erfindung ist nachfolgend anhand eines in den Zeichnungen gezeigten Ausführungsbeispiels und der Beschreibung näher erläutert. Es zeigen:

Fig. 1 im Mittelschnitt das Stapelgerät in oberster Stellung der Plattform, beladen mit einem Halmgutballen,

Fig. 2 im Mittelschnitt das Stapelgerät in vereinfachter Darstellung nach Absenkung der Plattform um eine Stufe, beladen mit zwei Halmgutballen,

Fig. 3 eine Ansicht von hinten auf die rechte Hälfte des Stapelgerätes nach Fig. 2,

Fig. 4 im Mittelschnitt und vereinfachter Darstellung das voll beladene Stapelgerät in Entladestellung und

Fig. 5 eine Ansicht von hinten auf die rechte Hälfte des Stapelgerätes nach Fig. 4.

Fig. 6 in vergrösserter Darstellung als Einzelheit eine Seitenansicht auf eine abgewandelte Ausführungsform einer Laufrolle bei Anlage an der Klinke gemäss Fig. 1,

Fig. 7 einen Schnitt durch die Laufrolle längs der Linie I-I in Fig. 6.

Das Stapelgerät ist direkt einem Presskanal 1 einer nicht näher dargestellten Ballenpresse nachgeschaltet und wird in Fahrtrichtung 2 bewegt. Es besteht im wesentlichen aus einer horizontalen Plattform 3, welche in vertikalen Führungen 4 verschiebbar gelagert und aus einer obersten Stellung A in mehreren Stufen entsprechend der Ballenhöhe absenkbar ist, wobei die Absenkstufen durch mechanische Klinken 5 festgelegt sind und die Absenkbewegung über einen Ballenfühler 6 vom Ballen 7 beim Erreichen seiner Endstellung ausgelöst wird.

Die Plattform 3 schliesst sich in ihrer obersten Stellung A an einen Presskanalboden 8 an und erstreckt sich in Presskanalbodenebene nach hinten. Die Breite der Plattform 3 entspricht etwa der Presskanalbreite, während die Länge kürzer als eine Ballenlänge bemessen ist. Das vordere freie Plattformende ist schräg nach unten abgeknickt, die seitlichen Enden sind um 90° nach unten abgekantet. Im vorderen Plattformbereich ist unterhalb der Plattform 3 ein Gegengewicht 9 befestigt. An der Unterseite ist die Plattform durch Längsrippen 10 versteift. Etwa im Bereich der halben länge der Plattform 3 ist auf jeder Seite ein senkrechter Tragarm 11 angebracht. Er estreckt sich um etwas mehr als eine Ballenhöhe von der Plattform 3 aus nach oben. Sein oberes Ende ist mit der Plattform 3 durch eine Stützstrebe 12 verbunden. Etwa in Plattformhöhe durchsetzt ein Zapfen 13 den Tragarm 11 und ragt nach aussen hinaus, so dass er ein Lager für eine untere Laufrolle 14 bildet. In einem Abstand darüber, welcher der Ballenhöhe entspricht, ist in gleicher Weise eine zweite obere Laufrolle 15 angeordnet. Mittels dieser Laufrollen 14, 15 ist die Plattform 3 in den Führungen 4 gelagert.

Die vertikalen Führungen 4 sind etwa auf halber Höhe beidseits ausserhalb der Plattformbreite an einem auf Rädern 16 fahrbaren Grundrahmen 17 befestigt. Der Grundrahmen 17 ist als U-förmiger, horizontaler Bügel aus Vierkantprofilrohr ausgebildet, dessen Öffnung entgegen der Fahrtrichtung 2 liegt. An der Bügelvorderseite ist eine Deichsel 18 angebracht, die mittels eines Flachsteckers 19 an eine Anhängevorrichtung 20 der Ballenpresse gekuppelt ist.

Die Führungen 4 bestehen jeweils aus einer durchgehenden U-Profilschiene 21, deren Schenkel 22, 23 der Plattform 3 zugekehrt sind. Die Schenkel 22, 23 bilden die Laufflächen für die Laufrollen 14, 15. Beide U-Profilschienen 21 sind am unteren und oberen Ende jeweils durch eine Quertraverse 24, 25 verbunden. Die Quertraverse 24 bildet gleichzeitig die untere Begrenzung für die unterste Stellung C der Plattform 3. Die oberste Stellung A der Plattform 3 ist beidseits durch einen höhenverstellbaren Anschlag 26 nach oben begrenzt. Der Anschlag 26 wird von einer senkrechten Stange 27 gebildet, die in ihrem unteren Bereich einen Gummipuffer 29 aufweist, gegen den die obere Laufrolle 15 läuft. Der obere Stangenbereich durchsetzt die obere Quertraverse 25, an der er mittels Stellmuttern 28 befestigt ist.

In der obersten Stellung A ist die Plattform 3 in beiden seitlichen Führungen 4 von je einer Klinke 5 gehalten. Die Klinke 5 greift durch eine Aussparung im hinteren Schenkel 23 der U-Profilschiene 21 in die Laufrollenbahn ein und stützt mit ihrer abgerundeten Oberseite 30 die untere Laufrolle 14 der Plattform 3 ab. Die Klinke 5 ist mit einem Bolzen 31 in zwei Laschen 32 drehbar gelagert, die am hinteren Schenkel 23 befestigt sind. Die untere Kante 33 der Aussparung bildet einen Anschlag für die Schwenkbewegung der Klinke 5 in den Laufrollenbereich. Aussen ist am Bolzen 31 ein unterer Arm 34 befestigt, der sich nach vorn erstreckt. Parallel zu ihm ist oberhalb des Ballens 7 ein oberer Arm 35 angeordnet. Beide Arme 34, 35 sind durch eine Koppelstange 36 verbunden. Die beiden oberen Arme 35 sind miteinander drehfest durch eine sich zwischen den Führungen 4 erstreckende Querstange 37 verbunden, welche jeweils in einer Lasche 38 am hinteren Schenkel 23 gelagert ist. Etwa in Plattformmitte ist an der Querstange 37 ein nach oben gerichteter Hebel 39 befestigt, der am oberen Ende über einen Zapfen 40 mit dem Ballenfühler 6 gelenkig verbunden ist.

Der Ballenfühler 6 besteht aus zwei in sich längenverschiebbaren und mit einem Stecker 41 gegeneinander feststellbaren Rohren 42, 43 und einem am freien Ende des hinteren Rohres 43 etwa um eine halbe Ballenhöhe abwärts gerichteten Anschlag 44, der nach hinten über das Plattformende hinausragt. Der Ballenfühler 6 ruht auf einer Querstrebe 45, die zwischen seitlichen Rahmenteilen 46 verläuft, und ist so angeordnet, dass ein auf der Plattform 3 nach hinten geschobener Ballen 7 nach dem Verlassen des Presskanals 1 gegen den Anschlag 44 stösst und die Klinke 5 ausser Eingriff mit der Laufrolle 14 bringt. Eine zwischen Führung 4 und Koppelstange 36 gespannte Feder 47 hält die Klinken 5 in Arretierstellung und den Ballenfühler 6 in vorderer Stellung.

Das untere Ende jeder U-Profilschiene 21 weist am vorderen Schenkel 22 eine Ausnehmung 48 auf, die grösser ist als der Durchmesser der Laufrolle 14. Vor der Ausnehmung 48 ist am Schenkel 22 eine dreieckförmige Konsole 49 angebracht. Sie besitzt einen sich nach vorn erstreckenden Ausschnitt 50, der sich genau an die Ausnehmung 48 anschliesst. Ein in der Konsolenspitze an einem Zapfen 51 schwenkbar gelagertes Kurvensegment 52 ist durch eine Koppelstange 53 mit dem vorderen Ende des unteren Armes 34 verbunden. In Ruhestellung verdeckt das Kurvensegment 52 unter dem Zug der Feder 47 den Ausschnitt 50. Durch Betätigung des Ballenfühlers 6 wird das Kurvensegment 52 aus dem Ausschnitt 50 geschwenkt.

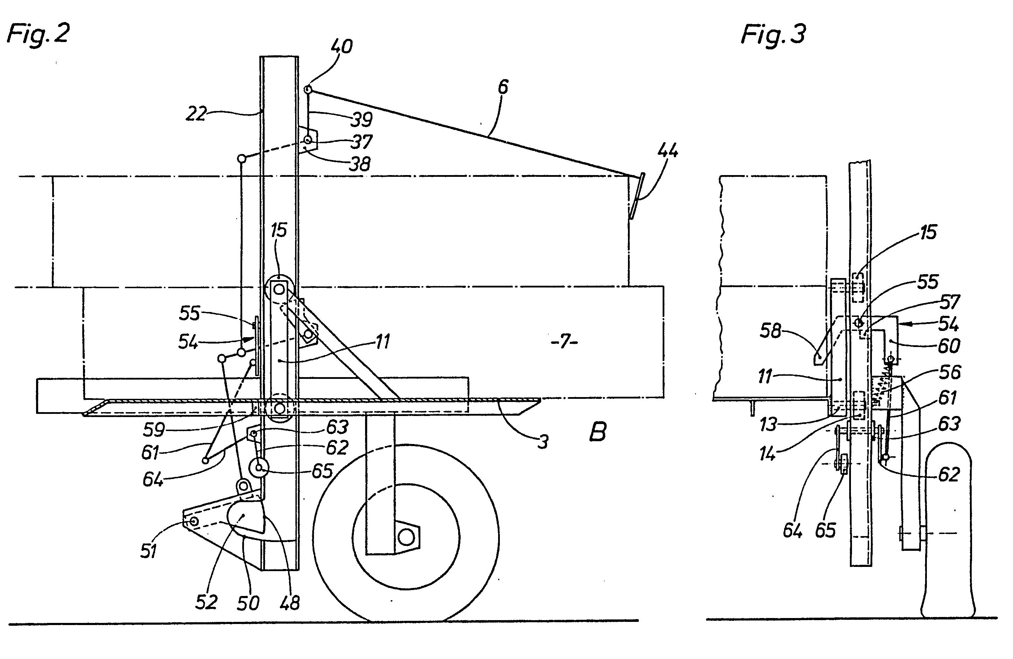

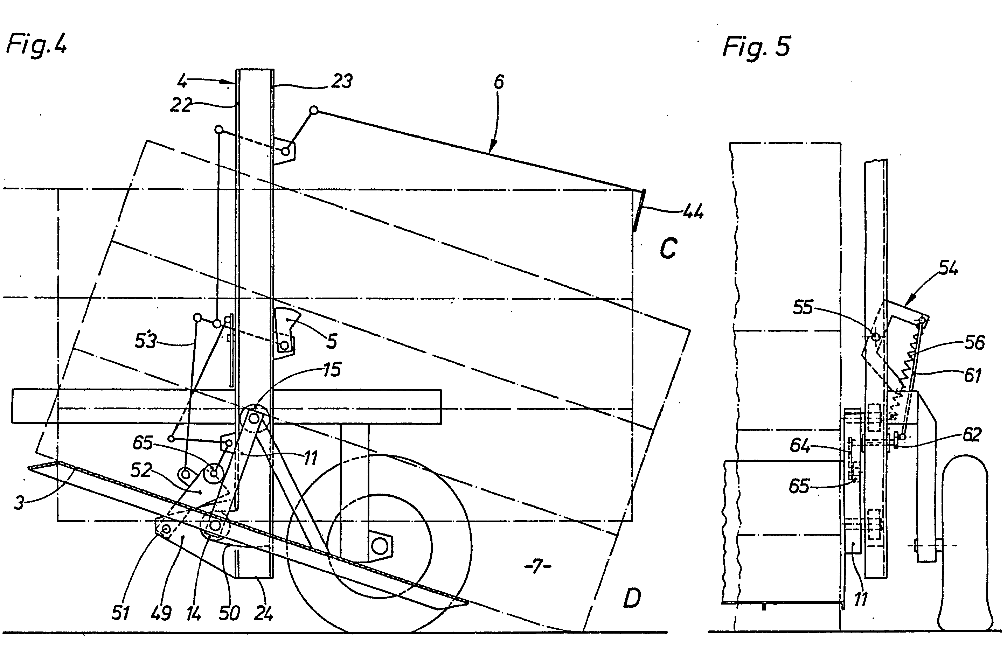

Im Bereich der mittleren Stellung B der Plattform (Fig. 2 und 3) ist an beiden Führungen 4 je ein Ballenrückschalter angeordnet. Er besteht aus einem Bügel 54 aus Flacheisen, der etwa in Bügelmitte auf einem am Schenkel 22 befestigten Zapfen 55 schwenkbar gelagert ist. Eine Feder 56 zieht den Bügel 54 gegen einen Anschlag 57. In dieser Stellung ragt ein der Plattform 3 zugekehrtes Bügelende 58 in den Plattformbereich hinein, so dass es seitlich in den Ballen 7 eingreift. Der äussere Bügelarm 60 ist über eine Stange 61 gelenkig mit einem Doppelhebel 62 gekoppelt. Der Doppelhebel 62/64 ist in Laschen 63 am Schenkel 22 gelagert. Der innere Hebelarm 64 besitzt eine Laufrolle 65, die in der Bahn des Tragarmes 11 angeordnet ist. Während der Bewegung der Plattform 3 in die Schrägstellung D (Fig. 4 und 5) drückt der Tragarm 11 gegen die Laufrolle 65, wobei der Bügel 54 aus dem Plattformbereich herausgeschwenkt wird. Bei der Zurückbewegung der Plattform 3 in die horizontale Lage schwenkt der Bügel 54 selbsttätig zurück. Die Plattform 3 weist zum freien Passieren des Bügelendes 58 bei ihrer Auf- und Abwärtsbewegung auf jeder Seite einen Schlitz 59 auf.

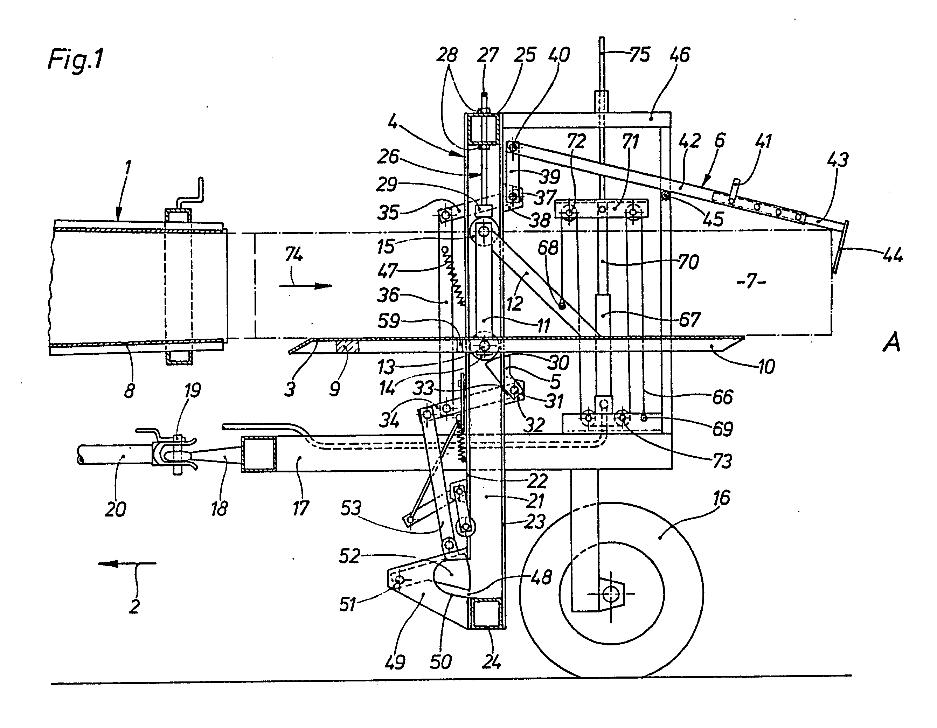

Die Bewegung der Plattform 3 aus ihrer untersten horizontalen Stellung C in ihre oberste Stellung A erfolgt über ein Seil 66 durch einen am Grundrahmen 17 befestigten Arbeitszylinder 67 (Fig. 1). Das eine Ende 68 des Seiles 66 ist an der Stützstrebe 12 befestigt, das andere Ende 69 am Grundrahmen 17. Der Arbeitszylinder 67 ist zwischen oberen, an der Kolbenstange 70 mittels einer Tragplatte 71 gelagerten Umlenkrollen 72 und unteren, am Grundrahmen 17 gelagerten Umlenkrollen 73 angeordnet. Über die Umlenkrollen 72, 73 wird das Seil 66 flaschenzugartig geführt. Am oberen Ende der Kolbenstange 70 ist eine nach oben gerichtete Anzeigestange 75 befestigt, die die Höhenstellung der Plattform 3 anzeigt. Bei der Zurückbewegung der Plattform 3 aus der Schrägstellung D in ihre horizontale Lage C wird ein nicht dargestellter Endschalter betätigt, der über ein nicht dargestelltes Steuerventil das Ausfahren des Arbeitszylinders 67 auslöst. Während des Ausfahrens des Arbeitszylinders 67 wird die Plattform 3 in ihre oberste Stellung A bewegt, bis die obere Laufrolle 17 gegen Anschlag 26 stösst.

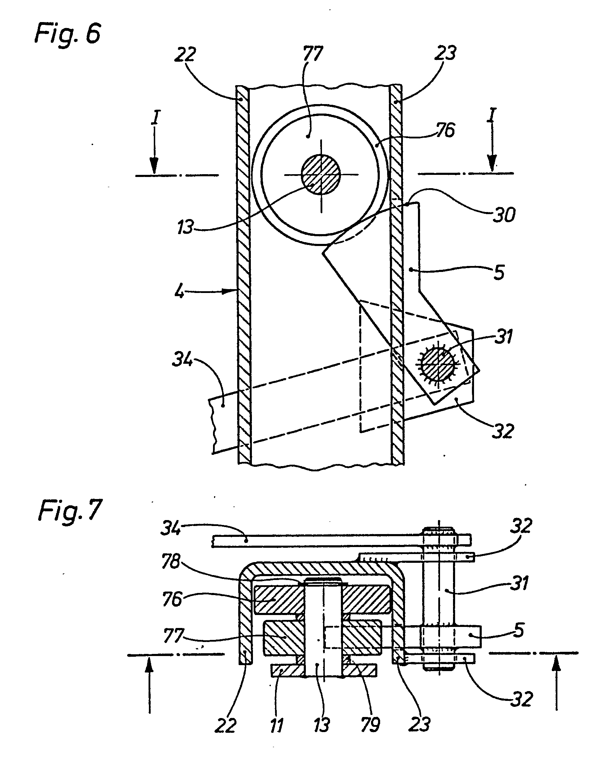

Im Unterschied zu den Figuren 1 bis 5 besteht bei der in Fig. 6 und 7 dargestellten Einzelheit jede Laufrolle aus zwei Rollen 76, 77, die beide frei drehbar auf dem Zapfen 13 gelagert und mit einem Sicherungsring 78 gegen axiale Verschiebung gesichert sind. Zwischen Rolle 77 und Tragarm 11 sowie zwischen den Rollen 76, 77 ist je eine Distanzscheibe 79 angeordnet. Die Rolle 76 hat einen Durchmesser, der etwa dem Abstand zwischen den Schenkeln 22, 23 entspricht und dient ausschliesslich der Plattformführung. Die Rolle 77 ist im Durchmesser kleiner als die Rolle 76, so dass sie mit den Schenkeln 22, 23 nicht in Berührung kommt. Sie liegt an der abgerundeten Oberseite 30 der Klinke 5 an. Während des Ausrückens der Klinke 5 besteht zwischen Rolle 77 und Klinke 5 eine Abrollbewegung.

Die Arbeitsweise der Vorrichtung ist wie folgt:

Während des Betriebs der Ballenpresse wird ein Einzelballen 7 in Schubrichtung 74 auf die Plattform 3 bis über ihr freies Ende hinausgeschoben. Kurz vor Erreichen der Ballenendstellung stösst die hintere Ballenoberkante gegen den Anschlag 44 des Ballenfühlers 6, wodurch die Klinken 5 entriegelt werden und sich die Plattform 3 mit dem Ballen 7 um eine Stufe absenkt. Sobald die Ballenoberkante den Anschlag 44 nicht mehr berührt, zieht die Feder 47 die Klinken 5 wieder zurück in ihre Arretierstellung und den Ballenfühler 6 in seine vordere Stellung. In der mittleren Stellung B liegen die Klinken 5 an der oberen Laufrolle 15 der Plattform 3 an (Fig. 2). Die seitlichen Ballenrückhalter 54 greifen in den Ballen 7 ein (Fig. 3) und verhindern ein Verschieben des Ballens nach hinten, wenn der nächste Ballen über diesen Ballen geschoben wird. Dann betätigt der zweite Ballen kurz vor Erreichen seiner Endstellung den Ballenfühler 6, wobei die Klinken 5 die oberen Laufrollen 15 freigeben und sich die Plattform 3 in die untere Stellung C absenkt. In dieser Stellung liegt die untere Laufrolle 14 auf der Quertraverse 24, das Kurvensegment 52 verdeckt den Ausschnitt 50 und in den zweiten Ballen greifen die Ballenrückhalter 54 ein. Läuft der dritte Ballen gegen den Anschlag 44 des Ballenfühlers 6, so wird das Kurvensegment 52 aus dem Ausschnitt 50 herausgeschwenkt. Die untere Laufrolle 14 kann nun in diesen Ausschnitt 50 hineingleiten, dabei kippt die Plattform 3 infolge des durch die Beladung nach hinten verlagerten Schwerpunktes in die Schrägstellung D, bis die hintere, untere Ballenstapelkante auf dem Erdboden aufliegt (Fig. 4). Durch diese Kippung werden die Ballenrückhalter 54 aus dem zweiten Ballen herausgeschwenkt (Fig. 5), und während der Vorwärtsbewegung des Stapelgerätes wird die Plattform 3 unter dem Ballenstapel weggezogen. Die freie Plattform 3 bewegt sich dann durch das Gegengewicht 9 in ihre horizontale Lage und wird anschliessend mit Hilfe des Arbeitszylinders 67 in ihre oberste Grundstellung A gebracht. Klinken 5, Kurvensegmente 52, Ballenfühler 6 sowie Ballenrückhalter 54 schwenken ebenfalls in die Ausgangsstellung. Ein neuer Stapelzyklus kann beginnen.

**Patentansprüche**

1. Stapelgerät für rechteckige Halmgutballen, bestehend aus einer horizontalen, beidseits in vertikalen Führungen (4) gelagerten Plattform (3), welche nach Aufschieben eines Halmgutballens aus einer obersten Stellung (A) in mehreren Stufen entsprechend der Ballenhöhe absenk- und in ihrer untersten Stellung (C) in eine entgegen der Fahrtrichtung (2) abfallende Schrägstellung (D) neigbar ist und welches einen Ballenfühler besitzt, gekennzeichnet durch folgende Merkmale:

a) die Absenkstufen der Plattform (3) sind durch entriegelbare Klinken (5) festgelegt;

b) die Plattform ist im Bereich etwa ihrer halben Länge in den Führungen (4) gelagert;

c) der Ballenfühler (6) gibt die Absenkbewegung der Plattform (3) erst frei, wenn der Halmgutballen über das abgabeseitige, freie Plattformende so weit hinausragt, dass das überstehende Ballenstück in der Schrägstellung (D) der Plattform (3) auf dem Erdboden aufliegt.

2. Stapelgerät nach Anspruch 1, dadurch gekennzeichnet, dass die Klinken (5) den Führungen (4) zugeordnet sind und mit dem Ballenfühler (6), welcher am abgabeseitigen Ende der Plattform angeordnet ist, gekoppelt sind, wobei der Ballenfühler (6) die Absenkung der Plattform (3) durch Entriegelung der Klinken freigibt, wenn der Ballen seine durch den Ballenfühler (6) vorbestimmte Endlage erreicht hat, und die Klinken (5) die Plattform (3) nach ihrer Absenkung um einen der Ballenhöhe entsprechenden Weg selbsttätig arretieren.

3. Stapelgerät nach einem der Ansprüche 1 oder 2, dadurch gekennzeichnet, dass der Plattform (3) auf jeder Seite ein Laufrollenpaar (14, 15) zugeordnet ist, wobei die Laufrollen (14, 15) eines Paares übereinander in einem Abstand angeordnet sind, welcher der Ballenhöhe entspricht, so dass für die oberste Stellung (A) der Plattform (3) die untere Laufrolle (14) an der Klinke (5) anliegt und für die nächste Stufe nach Absenken der Plattform (3) die obere Laufrolle (15) an derselben Klinke (5) anliegt.

4. Stapelgerät nach Anspruch 3, dadurch gekennzeichnet, dass die Laufrolle (14, 15) aus zwei frei drehbaren, koaxialen Rollen (76, 77) besteht, wobei eine Rolle (76) der Plattformführung dient und die andere, im Durchmesser etwas kleinere Rolle (77) mit der Klinke (5) zusammenwirkt.

5. Stapelgerät nach einem der Ansprüche 1 bis 4, dadurch gekennzeichnet, dass die vertikalen Führungen (4) im Bereich der untersten Stellung (C) der Plattform (3) einen horizontalen Führungsausschnitt (50) zum Schrägstellen der Plattform (3) aufweisen und dass ein schwenkbares Kurvensegment (52) vorgesehen ist, welches den horizontalen Führungsausschnitt (50) absperrt oder freigibt, wobei die Kurvensegmente (52) mittels eines Gestänges (53) mit den Klinken (5) gekoppelt und durch den Ballenfühler (6) gemeinsam steuerbar sind, so dass der Führungsausschnitt (50) freigegeben wird, wenn der letzte zu stapelnde Ballen seine Endstellung erreicht hat.

6. Stapelgerät nach einem der Ansprüche 1 bis 5, dadurch gekennzeichnet, dass der Schwerpunkt der unbeladenen Plattform (3) in Fahrtrichtung gesehen vor der Führung (4) und der Schwerpunkt der beladenen Plattform hinter der Führung liegt.

7. Stapelgerät nach einem der Ansprüche 1 bis 6, dadurch gekennzeichnet, dass die Plattform (3) durch einen am Rahmen (17) befestigten hydraulischen Arbeitszylinder (67) oder durch Federkraft aus ihrer untersten Stellung (C) in die oberste Stellung (A) selbsttätig nach Entladen des Ballenstapels anhebbar ist, wobei die Plattform (3) ihre Rückführung in die oberste Stellung (A) bei der Zurückbewegung aus ihrer Schrägstellung (D) in ihre horizontale Lage (C) durch Betätigung eines Steuerventiles auslöst und dass die Höhenstellungen der Plattform über eine Anzeigevorrichtung (75) vom Maschinenführer aus erkennbar sind.

8. Stapelgerät nach einem der Ansprüche 1 bis 7, dadurch gekennzeichnet, dass im Bereich der der obersten Stellung (A) der Plattform (3) unmittelbar folgenden ersten Absenkstufe beidseits an den Führungen (4) Ballenrückhalter (54) angeordnet sind, welche während der Ballenstapelbildung in den jeweils sich unterhalb des neu aufzuschiebenden Ballens befindlichen Ballen eingreifen und ihn in Schubrichtung (74) festhalten, während sie zum Entladen des Ballenstapels ausser Balleneingriff gebracht werden.

9. Stapelgerät nach Anspruch 8, dadurch gekennzeichnet, dass die Ballenrückhalter (54) als schwenkbare Zinken (58) ausgebildet sind, welche durch eine Feder (56) in der eingeschwenkten Stellung gehalten und durch die Neigbewegung der Plattform (3) in die Schrägstellung (D) zurückgeschwenkt werden.

10. Stapelgerät nach einem der Ansprüche 1 bis 9, dadurch gekennzeichnet, dass sich die Plattform (3) in ihrer obersten Stellung (A) an einen Presskanalboden (8) anschliesst und sich in Presskanalbodenebene nach hinten erstreckt, wobei ihre Breite etwa der Presskanalbreite entspricht und ihre Länge kürzer als die Ballenlänge bemessen ist.

**Claims**

1. Stacker for rectangular bales of stalky material, consisting of a horizontal platform (3), mounted on both sides in vertical guideways (4), which platform, after a bale of straw material has been pushed on, can be lowered from a uppermost position (A) in a plurality of stages corresponding to the height of the bale and in its lowest position (C) can be inclined into a sloping position (D) inclined against the direction of travel (2), and which stacker has a bale sensor, characterised by the following features:

a) the lowering stages of the platform (3) are set by catches (5) which can be unlocked;

b) the platform is mounted in the region of approximately half its length in the guideways (4);

c) the bale sensor (6) only releases the lowering movement of the platform (3) when the bale of stalky material (7) projets over the free platform end on the delivery side so far that the protruding piece of the bale rests on the ground in the inclined position (D) of the platform (3).

2. Stacker according to claim 1, characterised in that the catches (5) are associated with the guideways (4) and are coupled with the bale sensor (6), which is arranged on the end of the platform on the delivery side, whereby the bale sensor (6) releases the lowering of the platform (3) by unlocking the catches, when the bale has reached its end position which is predetermined by the bale sensor (6), and the catches (5) automatically arrest the platform (3) after its lowering by a distance corresponding to the height of the bale.

3. Stacker according to one of claims 1 or 2, characterised in that associated with the platform (3) on each side is a pair of running rollers (14, 15), in which the running rollers (14, 15) of a pair are arranged one over the other at a distance which corresponds to the height of the bale, so that for the uppermost position (A) of the platform (3), the lower running roller (14) rests against the catch (5) and for the next stage after the lowering of the platform (3) the upper running roller (15) rests against the same catch (5).

4. Stacker according to claim 3, characterised in that the running roller (14, 15) consists of two freely rotatably, coaxial rollers (76, 77), of which one roller (76) serves to guide the platform, and the other roller (77), which is slightly smaller in diameter, cooperates with the catch (5).

5. Stacker according to one of claims 1 to 4, characterised in that the vertical guideways (4) in the region of the lowest position (C) of the platform (3) have a horizontal guide aperture (50) for the tilting of the platform (3) and that a pivotable cam segment (52) is provided, which shuts off or frees the horizontal guide aperture (50), in which the cam segments (52) are coupled with the catches (5) by means of a linkage (53) and are able to be jointly controlled through the bale sensor (6), so that the guide aperture (50) is freed when the last bale which is to be stacked has reached its end position.

6. Stacker according to one of claims 1 to 5, characterised in that the centre of gravity of the unladen platform (3), lies in front, viewed in the direction of travel, of guideways (4), and the centre of gravity of the laden platform lies behind the guideway.

7. Stacker according to one of claims 1 to 6, characterised in that the platform (3) can be raised automatically from its lowest position (C) into the uppermost position (A) after unloading the bale stack, by a hydraulic working cylinder (67) attached to the frame (17), or by spring force, in which the platform (3) starts its return movement into the uppermost position (A) on the backward movement from its inclined position (D) into its horizontal position (C) through actuation of a control valve and that the height position of the platform can be detected by the driver of the machine via a display device (75).

8. Stacker according to one of claims 1 to 7, characterised in that in the region of the first lowering stage, immediately following the uppermost position (A) of the platform (3), on both sides on the guideways (4) bale retainers (54) are arranged, which during the formation of the bale stack engage in the bale which in each case is positioned beneath the new bale to be pushed on, and which retainers hold the former bale in the direction of thrust (74), whilst they are brought out of engagement with the bale for the unloading of the bale stack.

9. Stacker according to claim 8, characterised in that the bale retainers (54) are constructed as pivotable prongs (58) which are held in the turned in position by a spring (56) and are pivoted back by the sloping movement of the platform (3) into the inclined position (D).

10. Stacker according to one of claims 1 to 9, characterised in that the platform (3) in its uppermost position (A) joins on to the base (8) of a pressing channel and extends to the rear in the plane of the base of the pressing channel, whereby its width corresponds approximately to the width of the pressing channel and its length is shorter in measurement than the length of the bale.

## Revendications

1. Dispositif pour l'empilage de balles de paille ou les fourrages rectangulaires, comportant un plateau (3) horizontal, logé les deux côtés dans des guides verticaux (4), qui, après mise en place d'une balle, est mobile vers le bas, depuis une position la plus haute (A), en plusieurs échelons correspondant à la hauteur d'une balle et dans sa position la plus basse (C), est inclinable dans une position inclinée (D) en sens inverse du sens de marche (2), et qui possède un détecteur de balle, caractérisé en ce que:

a) les échelons de descente du plateau (3) sont déterminés par des cliquets (5) déverrouillables;

b) le plateau est logé dans les guides (4) à peu près au voisinage da se demi-longueur;

c) le détecteur de balle (6) ne libère le mouvement de descente du plateau (3) que lorsque la balle de paille (7) dépasse au-delà de l'extrémité libre, côté déchargement, du plateau suffisamment pour que, dans la position inclinée (D) du plateau (3), le morceau de balle qui déborde repose sur le sol.

2. Dispositif selon la revendication 1, caractérisé en ce que les cliquets (5) sont adjoints aux guides (4) et sont accouplés au détecteur de balle (6) disposé à l'extrémité, côté déchargement du plateau, de sorte que le détecteur de balle (6) libère la descente du plateau (3), en déverrouillant les cliquets, lorsque la balle a atteint sa position extrême prédéterminée par le détecteur de balle (6) et que les cliquets (5) bloquent automatiquement le plateau (3) après que ce plateau a descendu d'une distance correspondant à la hauteur de la balle.

3. Dispositif selon l'une des revendications 1 ou 2, caractérisé en ce que le plateau (3) coopère de chaque côté avec une paire de galets (14, 15), les galets (14, 15) d'une paire étant disposés l'un au-dessus de l'autre à une distance l'un de l'autre qui correspond à la hauteur des balles de sorte que pour la position la plus haute (A) du plateau (3), le galet inférieur (14) repose sur le cliquet (5) et que pour l'échelon suivant après descente du plateau (3), le galet supérieur (15) repose sur le même cliquet (5).

4. Dispositif selon la revendication 3, caractérisé en ce que le galet (14, 15) est constitué de deux galets (76, 77) coaxiaux, pouvant tourner librement, l'un des galets (76) servant au guidage du plateau et l'autre galet (77), de diamètre un peu plus petit, coopérant avec le cliquet (5).

5. Dispositif selon l'une des revendications 1 à 4, caractérisé en ce que les guides verticaux (4) présentent, dans la zone de la position la plus basse (C) du plateau (3), une échancrure horizontale de guidage (50) pour placer le plateau (3) en position inclinée et en ce qu'un segment courbe (52) qui peut pivoter, verrouille ou libère l'échancrure horizontale de guidage (50), les segments courbes (52) étant accouplés, à l'aide d'une tringle (53), aux cliquets (5) et peuvent être commandés ensemble par le détecteur de balle (6), de sorte que l'échancrure de guidage (50) est libérée lorsque la dernière balle à empiler a atteint sa position extrême.

6. Dispositif selon l'une des revendications 1 à 5, caractérisé en ce que le centre de gravité du plateau (3) non chargé se trouve, vu dans le sens de la marche, en avant du guide (4) et en ce que le centre de gravité du plateau chargé se trouve en arrière du guide.

7. Dispositif selon l'une des revendications 1 à 6, caractérisé en ce que le plateau (3), après le déchargement de la pile de balles, peut remonter automatiquement pour passer de sa position la plus basse (C) à sa position la plus haute (A) au moyen d'un vérin hydraulique (67) fixé sur le châssis (17) ou au moyen de la force d'un ressort, le plateau (3) provoquant son retour à la position la plus haute (A), lors de son mouvement de retour pour passer de sa position inclinée (D) à sa position horizontale (C), en actionnant un robinet de commande, et en ce que les positions en élévation du plateau peuvent être connues du conducteur de la machine par l'intermédiaire d'un dispositif indicateur (75).

8. Dispositif selon l'une des revendications 1 à 7, caractérisé en ce que dans la zone du premier échelon de descente qui suit immédiatement la position la plus haute (A) du plateau (3), des deux côtés, sont disposés sur les guides (4), des dispositifs de maintien de la balle (54) qui, pendant la formation de la pile de balles, viennent en prise avec la balle qui se trouve respectivement en dessous de la nouvelle balle à mettre en place et la bloquent dans le sens de cette mise en place (74), tandis que pour le déchargement de la pile de balles, ces dispositifs sont amenés hors de prise des balles.

9. Dispositif selon la revendication 8, caractérisé en ce que les dispositifs de maintien de la balle (54) sont conçus en forme de dents pivotantes (58) maintenues par un ressort (56) en prise avec la balle et rappelées par le mouvement d'inclinaison du plateau (3) dans la position inclinée (D) de ce plateau.

10. Dispositif selon l'une des revendications 1 à 9, caractérisé en ce que dans sa position la plus haute (A), le plateau (3) se raccorde au plancher d'un canal de pressage (8) et s'étend vers l'arrière à niveau avec ce plancher du canal de pressage, la largeur du plateau correspondant à peu près à la largeur du canal de la presse et sa longueur étant plus courte que la longueur des balles.

Fig.1

Fig.2

Fig.3

0 108 277

Fig. 5

Fig. 4

13

*Fig. 6*

22    77    23

76

I        I

30

13

5

4

31

34

32

*Fig.7*

34                                    32

78                                    31

76

77                                    5

32

22   11   13   79   23